Europäisches Patentamt

European Patent Office

Office européen des brevets

(19)

(11) Veröffentlichungsnummer: **0 142 575**

**A1**

(12) **EUROPÄISCHE PATENTANMELDUNG**

(21) Anmeldenummer: **83111656.1**

(22) Anmeldetag: **22.11.83**

(51) Int. Cl.⁴: **G 01 N 1/28**

(43) Veröffentlichungstag der Anmeldung:
**29.05.85** Patentblatt **85/22**

(84) Benannte Vertragsstaaten:
**DE FR GB SE**

(71) Anmelder: **Freiherr von Gise, Hardo, Dr. med.**
**Schwärzlocher Strasse 110**
**D-7400 Tübingen(DE)**

(72) Erfinder: **Freiherr von Gise, Hardo, Dr. med.**
**Schwärzlocher Strasse 110**
**D-7400 Tübingen(DE)**

(54) **Inkubationskapsel für die Einbettung biologischer Präparate in Paraffin zur Verwendung in automatisch arbeitenden Inkubations- und Aufblockeinrichtungen.**

(57) Die Inkubationskapsel für die Einbettung biologischer Präparate in Paraffin, gekennzeichnet durch die Verwendbarkeit in automatisch arbeitenden Infiltrations- und Ausblockeinrichtungen, besteht aus einem perforierten Aufblockrahmen (1) und einer bodenseitig perforierten Außenwanne (2), die Sollbruchlinien (2a) zum Aufreißen und Widerlager (2b) gegen zu tiefes Einrasten des Aufblockrahmens (1) aufweist, wobei dieser durch die Wülste (1a), die in die Perforationen (2c) der Außenwanne (2) eingreifen, in der Außenwanne (2) verankert ist, damit ein ungewolltes Öffnen vermieden wird. In einem alternativen Einbettungs- und Aufblockverfahren wird eine Inkubationskapsel mit einer Außenwanne (7) eingesetzt, die keine bodenseitigen Perforationen besitzt und an der Bodenunterseite über mehrere in eine Richtung verlaufende Abstandsstege verfügt, die bei enger Schichtung der Inkubationskapseln als Abstandshalter zur nächsten Inkubationskapsel dienen.

Die Inkubationskapseln kommen bis zum Abschluß des Infiltrationsprozesses des biologischen Gewebes in einer hochkanten Ausrichtung zum Einsatz und werden vor der Erstarrung des Paraffins in eine waagerechte Lage zurückversetzt, die ein Abfließen des Paraffins aus der Außenwanne (7) verhindert, wenn das Paraffin aus der Inkubationskammer selbst entleert wird.

FIGUR 1

1

Die Erfindung bezieht sich auf eine Inkubationskapsel für die Einbettung biologischer Präparate in Paraffin, die sich vom Stand der Technik dadurch unterscheidet, daß am Ende des Einbettungsprozesses nach der Infiltration des Präparates mit Paraffin die fertig aufgeblockten und sofort mit einem Mikrotom schneidbaren Präparate entnommen werden können.

Für die lichtmikroskopische Untersuchung von biologischen Proben ist es notwendig, diese in einen schneidfähigen Zustand zu bringen. Als Routineverfahren hat sich die Einbettung des Gewebes in Paraffin durchgesetzt. Das biologische Gewebe wird hierzu durch Aldehydlösungen fixiert und stufenweise über Alkohol oder Aceton entwässert und über eine Zwischenstufe mit einem Intermedium (organisches Lösungsmittel) in flüssiges heißes Paraffin überführt. Bei allen auf dem Weltmarkt befindlichen Halbautomaten wird das Gewebe dann im heißen und paraffininfiltrierten Zustand aus der Inkubationskammer entnommen und muß in einem manuellen Verfahren dann aufgeblockt werden, damit es nach der Erstarrung des Paraffins dann für den Schneidevorgang in die Halterung eines Mikrotomes eingespannt werden kann. Üblicherweise werden die biologischen Präparate für die Einbettungsprozedur in Präparatekapseln gebracht, die gekennzeichnet werden können und eine spätere Identifizierung ermöglichen. Derartige Präparatekapseln besitzen perforierte Wände, um eine ungehinderte Infiltration des Gewebes mit den Inkubationslösungen zu ermöglichen. Die herkömmlichen Halbautomaten für die Gewebeeinbettung besitzen Inkubationskammern, die nach dem Prinzip eines einfachen Kochtopfes arbeiten, der über einen Reagenzienversorgungsteil wahlweise mit Reagenzien gefüllt werden kann. Die Präparatekapseln mit den biologischen Proben werden lose oder in Körben in diese Inkubationskammern eingebracht.

Zur Automatisierung des Prozesses wäre es wünschenswert, wenn die Präparate in speziellen Kapseln und im erstarrten Zustand des Paraffins aus der Inkubationskammer herausgenommen werden könnten, sodaß die Präparate nach der Herauslösung aus den Kapseln sofort mit einem Mikrotom geschnitten werden könnten, ohne daß eine nachfolgende manuelle Aufblockung derselben notwendig ist. Mit keiner der auf dem Markt befindlichen Inkubationskapseln wäre es möglich ein derartiges Verfahren zu realisieren.

Hier will die Erfindung Abhilfe schaffen. Die Erfindung, wie sie in den Ansprüchen gekennzeichnet ist, löst die Aufgabe, eine Inkubationskapsel für die Einbettung biologischer Präparate in Paraffin zur Verwendung in automatischen Inkubationseinrichtungen zu schaffen, durch die konstruktiven Merkmale der in den Zeichnungen dargestellten Inkubationskapsel, bestehend aus einem Aufblockrahmen und einer Außenwanne, in die der Aufblockrahmen eingerastet wird. Der Aufblockrahmen weist ebenso wie die Außenwanne eine Vielzahl von Durchbrüchen auf, die einen ungehinderten Austausch der internen Flüssigkeit mit der umgebenden Flüssigkeit gewährleisten, wodurch Konzentrationsgradienden, die eine Infiltration des in der Kapsel befindlichen biologischen Gewebes beeinträchtigen würden schnell abgebaut werden. Der Aufblockrahmen ist durch Längs- und Querstreben mechanisch stabilisiert, damit er den speziellen Klemmvorrichtungen der Mikrotome standhält und das aufgeblockte Präparat für den Schneidevorgang bewegungsfrei montiert werden kann. Die Außenwanne besitzt Perforationslinien entlang derer die Außenwanne nach dem Füllen der Inkubationskapsel mit Paraffin und der Erstarrung des Paraffins eingerissen und von dem Paraffinblock abgelöst werden kann. Während des Entwässerungs- und Infiltrationsprozesses werden die so gestalteten Inkubationskapseln schichtweise übereinander in einer Inkubationskammer gelagert, aus der sie nach Abschluß des Infiltrationsprozesses im erstarrten Zustand des Paraffins wieder herausgelöst werden. Für diesen Vorgang ist eine spezielle Ausgestaltung der Inkubationskammer nötig wie sie in einer parallelen Patentanmeldung des gleichen Anmelders dargestellt wird.

Die durch die Erfindung erreichten Vorteile sind im wesentlichen darin zu sehen, daß bei Verwendung dieser Kapseln in automatischen Inkubationseinrichtungen die arbeitsaufwendige manuelle Aufblockung der Präparate nach der Infiltration mit heißem Paraffin entfällt, wobei wiederum die Gefahr einer Beschädigung derselben oder eine Verwechslung vermieden wird. Darüber hinaus ermöglicht die Konstruktion der Inkubationskapsel erstmalig die Automatisierung des Einbettungsprozesses bis zum fertigen aufgeblockten biologischen Präparat, was mit keiner der auf dem Weltmarkt befindlichen Inkubationskapseln möglich wäre! Ein weiterer Vorteil der Erfindung liegt darin, daß die Präparate in einem gekühlten und sofort schneidfähigen Zustand entnommen werden können. Durch die Erfindung können darüber hinaus die Kosten einer Paraffinausgießstation eingespart werden.

3

Im folgenden wird die Erfindung anhand von nur zwei Ausführungswegen darstellenden Zeichnungen näher erläutert.

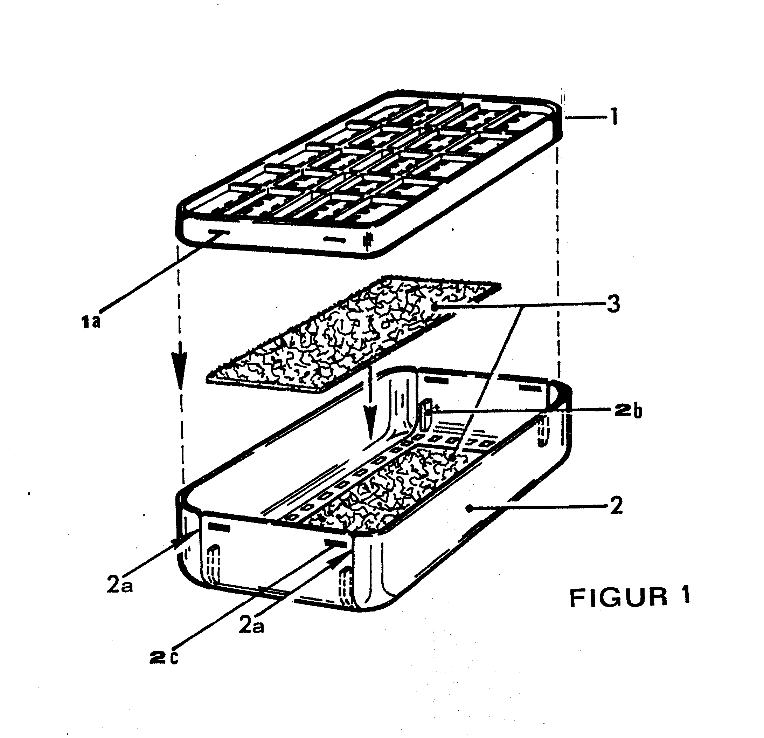

Es zeigt: Figur 1 den Aufbau der aus einem beschriftbaren
Ausblockrahmen und einer aufreißbaren Außenwanne bestehenden
Inkubationskapsel, in die das biologische Gewebe für den
Einbettungsprozeß in Paraffin eingelegt wird.

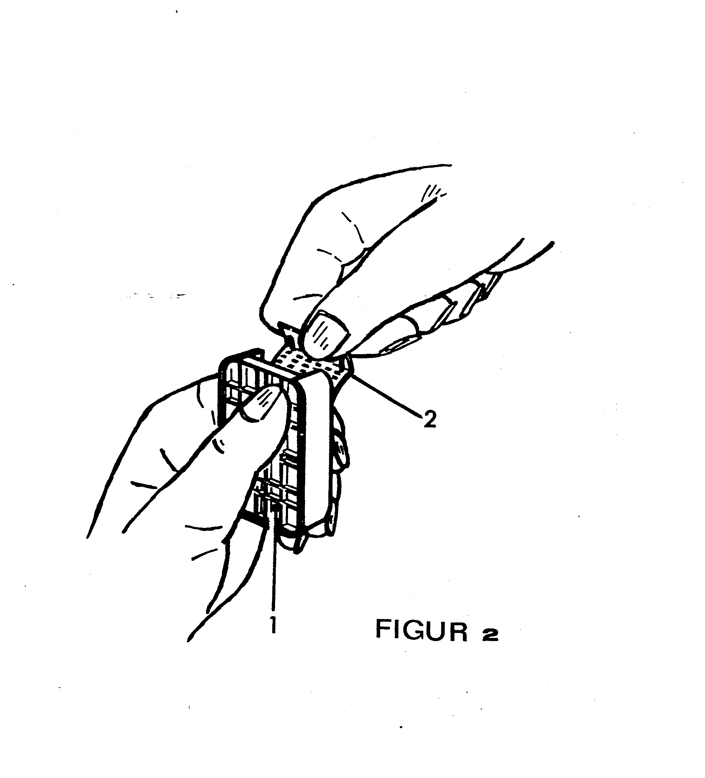

Figur 2 den Vorgang des Abreißens der Außenwanne von dem in
der Inkubationskapsel erstarrten Paraffin entlang der
Perforationslinien.

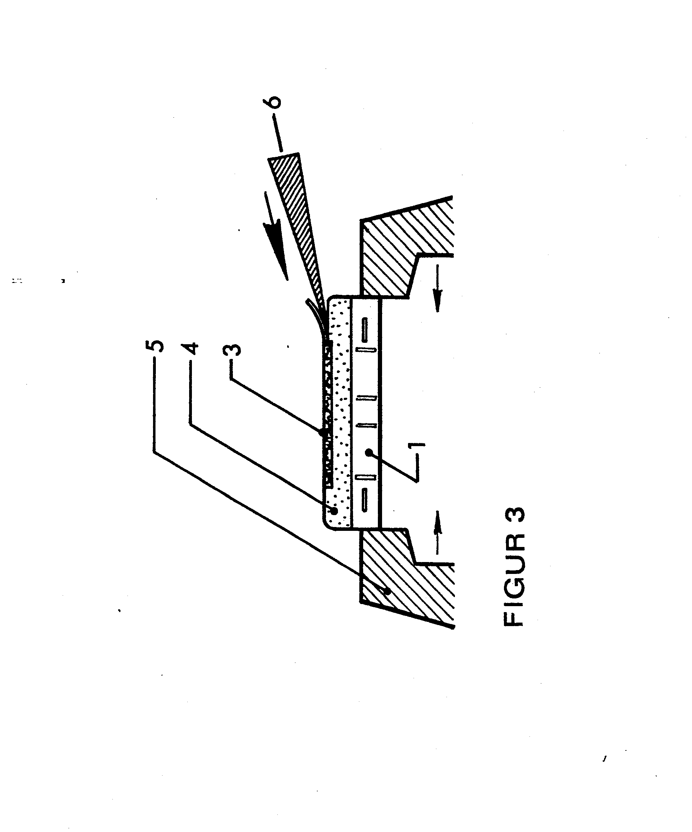

Figur 3 den Aufblockrahmen mit dem erstarrten Paraffin und
dem darin befindlichen biologischen Gewebe in einer schematisierten Klemmvorrichtung eines Mikrotomes und den
Schneidevorgang.

Figur 4 eine Modifikation
der Außenwanne ohne bodenseitige Perforationen, die in einen
abgewandelten Verfahren als Ausblockwanne dient.

In den Figuren ist eine Inkubationskapsel für die Einbettung
biologischer Präparate in Paraffin zur Verwendung in automatischen Inkubationseinrichtungen dargestellt, welche in
ihrem grundsätzlichen Aufbau einerseits aus einem Aufblockrahmen 1 mit Längs- und Querverstrebungen und einer Vielzahl
von Durchbrüchen und andererseits aus einer Außenwanne 2 mit
zwei längs verlaufenden Sollbruchlinien 2a und vielfach perforiertem Boden besteht. Der Aufblockrahmen 1 dient als
Deckel der Inkubationskapsel und liegt im eingerasteten Zustand auf den Widerlagern 2b der Außenwanne auf. Die Wülste
1a verankern den Aufblockrahmen 1 in den Perforationen 2c
der Außenwanne 2 und verhindern so ein ungewolltes Öffnen
der Inkubationskapsel sowie den Verlust des darin befindlichen biologischen Gewebes 3. Die derart gestalteten Inkubationskapseln werden schichtweise übereinander in einer
speziell gestalteten Inkubationskammer, die Gegenstand einer
getrennten Anmeldung ist, für den Einbettungsprozeß gelagert
und am Ende des Prozesses aus dieser mit erstarrtem Paraffin
wieder entnommen. Nach der Abschälung der Außenwanne 2 von
dem in der Inkubationskapsel erstarrten Paraffin 4 mit dem
paraffininfiltrierten biologischen Gewebe 3, gemäß in Figur
2 dargestellter Weise, wird das so aufgeblockte Präparat in
die schematisch dargestellte Klemmvorrichtung 5 eines Mikrotomes eingespannt und kann mittels des schematisch dargestellten Messers 6 sofort geschnitten werden.

4

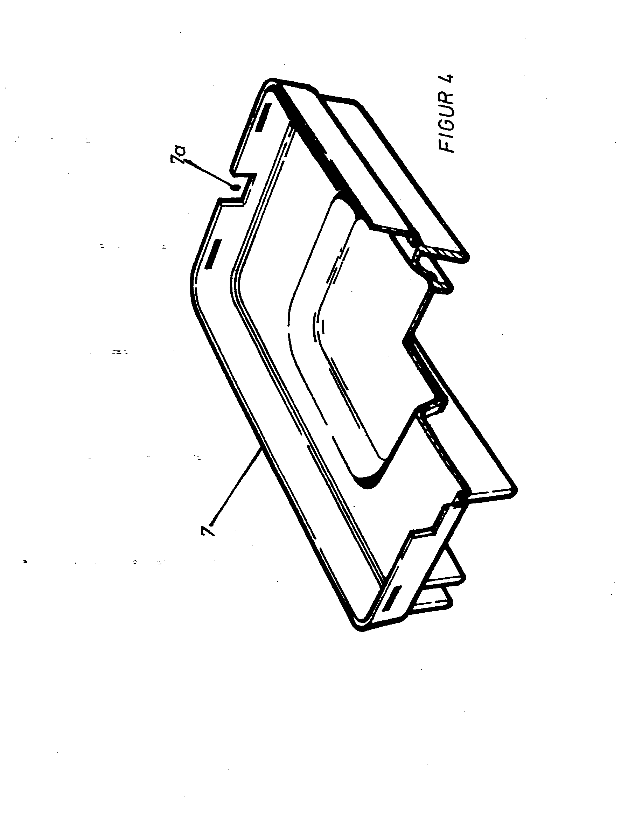

Die in Figur 4 dargestellte Modifikation der Außenwanne 7 kommt in Verbindung mit dem Aufblockrahmen 1 in einem abgewandelten Aufblockverfahren zur Anwendung. Bei diesem Verfahren werden die Inkubationskapseln in der Inkubationskammer in speziellen Rahmen derart befestigt, daß sie um einen Winkel von 90° gekippt werden können. Während des Entwässerungs- und Infiltrationsprozesses werden die Inkubationskapseln hochkant gestellt, so daß beim Füllen der Inkubationskammer, in der sich die Inkubationskapseln befinden, die Reagenzien ungehindert in die Inkubationskapseln einfließen oder abfließen können. Nach Abschluß des Infiltrationsprozesses werden die Inkubationskapseln dann in ihre Ausgangslage zurückgeklappt, so daß das heiße Paraffin beim Entleeren der Inkubationskammer nicht aus den Inkubationskapseln ablaufen kann und bei dem dann eingeleiteten Abkühlungsprozeß in den Inkubationskapseln erstarrt und das auf dem Wannenboden liegende biologische Gewebe mit dem Aufblockrahmen verbindet. Die Außenwanne 7 kann mit Sollbruchlinien wie Außenwanne 2 versehen werden, die das Ablösen vom Paraffinblock erleichtern. Alternativ können alle Innenwände der Außenwanne 7 so stark abgeschrägt und abgerundet werden, daß der erstarrte Paraffinblock ohne Beschädigung aus der Wanne gelöst werden kann. Durch eine Teflonbeschichtung kann die Entformbarkeit weiter verbessert werden. Die Einkerbung 7a der Außenwanne 7 erleichtert durch die Ansetzbarkeit eines Werkzeuges die Trennung zwischen Aufblockrahmen 1 mit dem anhängenden Paraffinblock und der Außenwanne 7 selbst.

5

Patentansprüche

1. Inkubationskapsel für die Einbettung biologischer Präparate in Paraffin, gekennzeichnet durch die Verwendbarkeit in automatisch arbeitenden Infiltrations- und Ausblockeinrichtungen, bestehend aus einem perforierten Aufblockrahmen (1) und einer bodenseitig perforierten Außenwanne (2), die Sollbruchlinien (2a) zum Aufreißen und Widerlager (2b) gegen zu tiefes Einrasten des Aufblockrahmens (1) aufweist, wobei dieser durch die Wülste (1a), die in die Perforationen (2c) der Außenwanne (2) eingreifen, in der Außenwanne (2) verankert ist, damit ein ungewolltes Öffnen vermieden wird, wodurch das in der Inkubationskapsel befindliche biologische Gewebe (3) verloren gehen könnte.

2. Inkubationskapsel für die Einbettung biologischer Präparate in Paraffin, gekennzeichnet durch die Verwendbarkeit in automatisch arbeitenden Infiltrations- und Ausblockeinrichtungen, bestehend aus einem Aufblockrahmen (1) und einer Außenwanne (7), die keine bodenseitigen Perforationen besitzt und an der Bodenunterseite über mehrere in eine Richtung verlaufende Abstandsstege verfügt, die bei enger Schichtung der Inkubationskapseln als Abstandshalter zur nächsten Inkubationskapsel dienen und eine ungehinderte Zirkulation der um die Kapseln herum befindlichen Flüssigkeit gewährleisten, wobei die Inkubationskapseln bis zum Abschluß des Infiltrationsprozesses des biologischen Gewebes in einer hochkanten Ausrichtung zum Einsatz kommen und vor der Erstarrung des Paraffins in eine waagerechte Lage zurückversetzt werden, die ein Abfließen des Paraffins aus der Außenwanne (7) verhindert, wenn das Paraffin aus der Inkubationskammer selbst entleert wird.

3. Verfahren zur Einbettung und Aufblockung biologischer Präparate in Paraffin, gekennzeichnet durch eine automatische und ohne jegliche manuellen Eingriffe erfolgende Aufblockung der biologischen Präparate durch Abkühlung des in speziell ausgestalteten Inkubationskapseln befindlichen Paraffins mit nachträglicher Ablösung von Teilen der Inkubationskapsel.

FIGUR 1

1

1a

3

2b

2

2a

2a

2c

0142575

1    2    FIGUR 2

FIGUR 3

0142575

FIGUR 4

Europäisches
Patentamt

**EUROPÄISCHER RECHERCHENBERICHT**

**0142575**
Nummer der Anmeldung

EP  83 11 1656

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-1 767 660  (TRIANGLE BIOMEDICAL EQUIPMENT) * Seite 24, Zeile 23 - Seite 30, Zeile 12; Figuren 12-20 * | 1 | G 01 N   1/28 |
| A | US-A-3 982 862  (J.E.P. PICKETT et al.) * Spalte 8, Zeile 21 - Spalte 9, Zeile 3; Figuren 1-11 * | 1 | |
| A | US-A-3 554 433  (M.L. CARDENAZ) * Spalte 4, Zeilen 11-42; Figur 6 * | 1 | |
| A | US-A-4 034 884  (F.K. WHITE) * Spalte 4, Zeilen 34-63; Figuren 1,3,4 * | 1 | RECHERCHIERTE SACHGEBIETE (Int. Cl. ³) |
| | | | G 01 N   1/00 |

Der vorliegende Recherchenbericht wurde für alle Patentansprüche erstellt.

| Recherchenort | Abschlußdatum der Recherche | Prüfer |
|---|---|---|
| DEN HAAG | 10-07-1984 | ANTHONY R.G. |